(19) Europäisches Patentamt
European Patent Office
Office européen des brevets

(11) Numéro de publication: **0 271 385 B1**

(12) **FASCICULE DE BREVET EUROPEEN**

(45) Date de publication du fascicule du brevet: **12.09.90**

(51) Int. Cl.⁵: **C08G 63/91,** C10L 1/22

(21) Numéro de dépôt: **87402562.0**

(22) Date de dépôt: **13.11.87**

(54) **Polymères à fonctions azotées dérivés de polyesters insaturés et leur utilisation comme additifs d'abaissement du point d'écoulement des distillats moyens d'hydrocarbures.**

(30) Priorité: **21.11.86 FR 8616361**

(43) Date de publication de la demande: **15.06.88 Bulletin 88/24**

(45) Mention de la délivrance du brevet: **12.09.90 Bulletin 90/37**

(84) Etats contractants désignés: **BE CH DE ES GB IT LI NL SE**

(56) Documents cités:
**US-A- 2 969 335**
**US-A- 3 090 795**
**US-A- 4 135 887**

(73) Titulaire: **INSTITUT FRANCAIS DU PETROLE, 4, Avenue de Bois-Préau, F-92502 Rueil-Malmaison(FR)**
Titulaire: **ELF FRANCE, Société Anonyme dite:, Tour Elf 2 place de la Coupole La Défense 6, F-92400 Courbevoie(FR)**

(72) Inventeur: **Denis, Jacques, Les Chênes 18, Chemin Grandes Bruyères, F-69260 Charbonnière Les Bains(FR)**
Inventeur: **Garapon, Jacques, 64, rue des Aqueducs, F-69005 Lyon(FR)**
Inventeur: **Damin, Bernard, 162, Grande Rue, F-69600 Oullins(FR)**
Inventeur: **Leger, Robert, rue Pierre Semard 5, résidence Cazardes, F-69520 Grigny(FR)**

(74) Mandataire: **Colas des Francs, Jean, Institut Français du Pétrole 4, Avenue de Bois Préau, F-92502 Rueil-Malmaison(FR)**

EP 0 271 385 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des polymères modifiés comportant des groupements latéraux amino-substitués dérivés de composés à fonction amine primaire.

Les polymères de la présente invention sont en particulier uitilisables comme additifs permettant l'amélioration des propriétés d'écoulement à froid des distillats moyens d'hydrocarbures (fuels et gazoles).

Les polymères modifiés de la présente invention résultent de la réaction d'au moins un composé à fonction amine primaire répondant à l'une des formules générales (I) ou (II), décrites ci-après, sur un polymère de condensation (polyester insaturé) résultant de la condensation d'au moins un composé aliphatique monoépoxydé (dénommé ci-après composé monoépoxydé) sur au moins un composé aliphatique insaturé dicarboxylique vicinal, comportant au moins une insaturation éthylénique en alpha de l'un des groupes carboxyliques (dénommé ci-après composé dicarboxylique).

Les polymères de condensation, résultant de la condensation d'au moins un composé monoépoxydé sur au moins un composé dicarboxylique sont des composés décrits dans l'art antérieur et connus, pour certains d'entre eux, comme additifs ayant une action sur le point d'écoulement des pétroles bruts et des fuel-oils (US-A-4135887).

De façon surprenante, on a découvert que les composés de la présente invention sont des additifs permettant une amélioration plus importante des propriétés d'écoulement à froid des distillats moyens d'hydrocarbures que celle obtenue avec la plupart des additifs préconisés dans l'art antérieur.

Les polymères de condensation servant à préparer les polymères modifiés de la présente invention sont obtenus par les méthodes classiques de préparation des polymères de condensation bien connues de l'homme du métier.

Le composé dicarboxylique que l'on emploie dans la présente invention est habituellement un composé monoinsaturé de 4 à 8 atomes de carbone par molécule, par exemple l'acide maléique, l'acide fumarique, l'acide itaconique, l'acide citraconique et l'acide mésaconique.

Le composé dicarboxylique est de préférence un anhydride cyclique monoinsaturé tel que par exemple l'anhydride maléique, les anhydrides alkylmaléiques et les anhydrides alcényl-succiniques.

Dans le cadre de l'invention, les anhydrides préférés sont l'anhydride maléique, l'anhydride citraconique (méthylmaléique) et l'anhydride itaconique (méthylène-succinique).

Le composé monoépoxydé utilisé dans le cadre de l'invention est habituellement un composé ayant au moins 8 atomes de carbone et de préférence au moins 10 atomes de carbone dans sa molécule dont le groupe époxy est en position terminale. Le composé monoépoxydé utilisé dans le cadre de l'invention comporte habituellement de 8 à 54 atomes de carbone et de préférence de 10 à 48 atomes de carbone dans sa molécule. On utilise de préférence un monoépoxyalkane terminal.

Les monoépoxyalkanes terminaux utilisés de préférence dans la présente invention répondent à la formule générale :

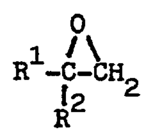

dans laquelle $R^1$ est l'hydrogène ou un groupe alkyle inférieur ayant par exemple de un à quatre atomes de carbone, tel que méthyle, éthyle, propyles et butyles ; $R^2$ est un groupe alkyle, de préférence linéaire, ayant habituellement de 2 à environ 48 atomes de carbone, de préférence de 6 à environ 48 atomes de carbone et plus particulièrement de 12 à environ 30 atomes de carbone, les groupements $R^1$ et $R^2$ étant toujours choisis de manière que le nombre d'atomes de carbone dans la molécule du monoépoxyalkane soit au moins égale à 8 de préférence au moins égal à 10.

Les monoépoxyalkanes préférés sont ceux dans lesquels $R^1$ est l'hydrogène et $R^2$ un groupe alkyle sensiblement linéaire ayant de 6 à 46 atomes de carbone et de préférence de 12 à 30 atomes et d'une manière plus préférée de 12 à 24 atomes de carbone.

A titre d'exemples spécifiques d'époxyalkanes, on peut citer :
l'époxy-1,2-octane, l'époxy-1,2-nonane,
l'époxy-1,2-décane, l'époxy-1,2- undécane,
l'époxy-1,2-dodécane, l'époxy-1,2-tétradécane,
l'époxy-1,2-pentadécane, l'époxy-1,2-hexadécane,
l'époxy-1,2-heptadécane, l'epoxy-1,2-octadécane,
l'epoxy-1,2-nonadécane, l'époxy-1,2-eicosane,
l'époxy-1,2-docosane, l'époxy-1,2-tétracosane,

l'époxy-1,2-hexacosane et les polybutènes époxydées de masse moléculaire moyenne $\overline{Mn}$ comprise entre environ 100 et environ 1000.

Le polyester insaturé est habituellement obtenue en faisant réagir au moins un composé dicarboxylique (tel que défini ci-dessus) avec au moins un composé monoépoxydé (tel que défini ci-dessus) en présence d'un catalyseur de condensation, par exemple un acide et de préférence un acide fort tel que l'acide chlorhydrique. Il est également possible d'employer comme catalyseur de condensation un composé de titane, par exemple le titanate de n-butyle.

La condensation entre au moins un composé dicarboxylique et au moins un composé monoépoxydé peut être effectuée en présence ou en absence de solvant. On peut par exemple utiliser un solvant hydrocarboné tel que le benzène, l'hexane, le cyclohexane, le toluène, le xylène ou un mélange d'hydrocarbures tel que par exemple une coupe hydrocarbonée à point d'ébullition élevé telle qu'un kérosène ou un gazole.

La réaction de condensation est habituellement effectuée à une température d'environ 50 à 200 °C et de préférence d'environ 80 à 160 °C pendant environ 1 heure à environ 30 heures et de préférence pendant environ 5 heures à environ 15 heures.

La condensation entre le composé dicarboxylique et le composé monoépoxydé est effectuée en employant des quantités de chacun de ces composés telles que le rapport molaire composé monoépoxydé/composé dicarboxylique soit habituellement compris entre 0,8:1 et 1,2:1 et de préférence entre environ 0,9:1 et environ 1,15:1 et plus particulièrement entre environ 1:1 et environ 1,15:1.

Le polyester insaturé, ainsi obtenu, est ensuite mis en réaction avec au moins un composé à fonction amine primaire tel que défini ci-après. La réaction est généralement effectuée en présence d'un solvant qui peut être identique ou différent de celui utilisé dans l'étape de préparation du polyester insaturé.

Lorsque le solvant utilisé dans cette réaction d'addition du composé à fonction amine est le même que celui employé lors de la formation du polyester, il est possible de ne pas isoler le polyester et d'effectuer la réaction sur le produit brut de polycondensation, éventuellement après avoir enlevé le catalyseur employé pour la polycondensation.

Lorsque la polycondensation a été effectué sans employer de solvant, le polyester est de préférence d'abord dissous avec une quantité de solvant représantant habituellement en poids le poids du polyester formé, puis on effectue la réaction d'addition avec le composé à fonction amine primaire.

Les composés à fonction amine primaire que l'on utilise comprennent au moins 8 atomes de carbone et de préférence au moins 10 atomes de carbone dans leur molécule ; ils compriment habituellement de 8 à 46 atomes de carbone et de préférence de 10 à 46 atomes de carbone dans leur molécule. Les composés à fonction amine primaire utilisés répondent à l'une des formules générales suivantes :

$$\text{(I)}\quad R - Z\left[(CH_2)_n - NH\right]_m - H \quad \text{et}$$
$$\text{(II)}\quad HO - R'' - NH_2$$

où R représente un radical aliphatique monovalent ayant au plus 46 et de préférence au plus 30 atomes de carbone, de préférence saturé ; Z est choisi parmi les groupes -O-, -NH-, et -NR'- dans lesquels R' représente un radical alilphatique, de préférence saturé, monovalent ayant de 1 à 30 atomes de carbone, de préférence de 10 à 24 atomes de carbone et préférentiellement R' est un radical linéaire ; n est un nombre entier de 2 à 4 ; m est zéro lorsque Z est -NH- ou un nombre entier de 1 à 4 dans tous les cas ; R"représente un radical aliphatique, de préférence saturé, divalent ayant de 8 à 46 atomes de carbone, de préférence de 8 à 24 atomes de carbone et d'une manière préféré de 10 à 24 atomes de carbone.

Les composés de formule (I) ci-dessus peuvent consister en des monoalkyl-amines primaires de formule $R\text{-}NH_2$ (dans ce cas, dans la formule (I), Z représente le groupement -NH-, et la valeur de m est zéro).

De préférence, le radical R est substantiellement linéaire et renferme de 8 à 46 atomes de carbone, d'une manière préférée de 10 à 46 atomes de carbone et avantageusment de 10 à 24 atomes de carbone. Comme exemples spécifiques de ces amines, on peut citer : l'octylamine, la nonylamine, la décylamine, la dodécylamine, la tétradécylamine, l'hexadecylamine, l'octadécylamine, l'eicosylamine et la docosylamine.

Les composés de formule (I) peuvent encore consister en des polyamines aliphatique saturées répondant à la formule :

$$R - NH\left[(CH_2)_n - NH\right]_m - H$$

qui correspond à la formule générale (I) dans laquelle Z représente le groupement -NH- ; m peut avoir une valeur de 1 à 4 et n une valeur de 2 à 4, de préférence 3.

De préférence, le radical R est substantiellement linéaire et renferme de 6 à 24 atomes de carbone, le nombre d'atomes de carbone de la polyamine employée étant toujours au moins égal à 8.

Comme composé spécifiques, on peut citer à titre d'exemples les N-alkyl diamino-1,3 propane dans lesquels le groupe alkyle comporte de 5 à 24 atomes de carbone et de préférence de 7 à 24 atomes de carbone par exemple le N-dodécyl diamino-1,3 propane, le N-tétradécyl diamino-1,3 propane, le N-hexadécyl diamino-1,3 propane, le N-octadécyl diamino- 1,3 propane, le N-eicosyl diamino-1,3 propane et le N-docosyl diamino- 1,3 propane ; on peut également citer les N-alkyl dipropylène triamines dans lesquelles le

groupe alkyle comporte de 2 à 24 atomes de carbone et par exemple parmi les composés dont le groupe alkyle comporte de 12 à 24 atomes de carbone, la N-hexadécyldipropylène triamine, la N-octadécyldipropylène triamine, la N-eicosyldipropylène triamine et la N-docosyldipropylène triamine.

Les composés de formule (I) peuvent également consister en des polyamines répondant à la formule :

$$\begin{matrix} R \\ R' \end{matrix} > N \left[ (CH_2)_n - NH \right]_m H$$

correspondant à la formule générale (I) où Z représente -NR'- où R et R', identiques ou différents, sont chacun un radical alkyle ayant de 1 à 46 atomes de carbone, de préférence de 1 à 30 atomes de carbone et d'une manière plus préféré de 8 à 24 atomes de carbone, R et R' renfermant à eux deux au moins 6 atomes de carbone, de préférence au moins 16 atomes de carbone et habituellement de 16 à 32 atomes de carbone ; n a une valeur de 2 à 4 et m une valeur de 1 à 4 ; R et R' sont de préférence substantiellement linéaires. Les polyamines répondant à cette formule, utilisées dans le cadre de la présente invention, comportent au moins 8 atomes de carbone dans leur molécule.

Comme composés spécifiques, on peut citer le N,N-diisopropyl diamino-1,2 éthane, le N,N-dibutyl diamino-1,2 éthane, le N,N-diéthyl diamino-1,4 butane, le N,N-dioctyl diamino-1,3 propane, le N,N-didécyl diamino-1,3 propane, le N,N-didodécyl diamino-1,3 propane, le N,N-ditétradécyl diamino-1,3 propane, le N,N-dihexadécyl diamino-1,3 propane, le N,N-dioctadécyl diamino-1,3 propane, la N,N-didodécyldipropylène triamine, la N,N-ditétradécyldipropylène triamine, la N,N-dihexadécyldipropylène triamine, la N,N-dioctadécyldipropylène triamine, le N-méthyl N-octyl diamino-1,2 éthane, le N-éthyl N-octyl diamino-1,2 éthane, le N-méthyl N-décyl diamino-1,2 éthane, le N-méthyl N-dodécyl diamino 1,3 propane, le N-méthyl N-hexadécyl diamino-1,3 propane et le N-éthyl N-octadécyl diamino-1,3 propane.

Enfin, les composés de formule (I) peuvent consister en des éther-amines répondant plus particulièrement à la formule:

$$R - O \left[ (CH_2)_n - NH \right]_m H$$

qui correspond à la formule générale (I) dans laquelle Z est un atome d'oxygène ; de préférence, le radical R est substantiellement linéaire et renferme de 6 à 24 atomes de carbone, m est un nombre entier de 1 à 4 et n est un nombre entier de 2 à 4, préférentiellement 2 ou 3. Les éther-amines répondant à cette formule, utilisées dans le cadre de la présente invention, comportent au moins 8 atomes de carbone dans leur molécule.

Parmi les alkyl-éther-amines, on peut citer comme composés spécifiques : l'octyloxy-3 propylamine, la décyloxy-3 propylamine, l'hexadécycloxy-3 propylamine, l'éicosyloxy-3 propylamine, la docosyloxy-3 propylamine, le N-(octyloxy-3 propyl) diamino-1,3 propane, le N-(décyloxy-3 propyl) diamino-1,3 propane, la (triméthyl-2,4,6 décyl) oxy-3 propylamine et le N- (triméthyl-2,4,6 décyl) oxy-3 propyl diamino-1,3 propane.

Le composé à fonction amine primaire mis en jeu dans la préparation des copolymères modifiés de l'invention peut aussi consister en un aminoalcool de formule (II) :

$HO - R'' -NH_2$

où R" représente un radical aliphatique, de préférence saturé, divalent, linéaire ou ramifié, de préférence substantiellement linéaire, renfermant de 8 à 46 atomes de carbone, de préférence de 8 à 24 atomes de carbone et d'une manière plus préférée de 10 à 24 atomes de carbone. On utilise de préférence des aminoalcools comportant une fonction alcool primaire.

Comme exemple spécifiques, on peut citer :

l'amino-1 octanol-8, l'amino-1 décanol-10, l'amino-1 undécanol-11, l'amino-1 tridécanol-13, l'amino-1 tétradécanol-14, et l'amino-1 hexadécanol-16.

Il doit être entendu qu'il est possible de mettre en jeu comme composé à fonction amine primaire un ou plusieurs composés répondant à la formule (I) et/ou un ou plusieurs composés répondant à la formule II.

Comme exemples spécifiques de mélange de composés à fonction amine primaire, on peut citer:

les coupes d'amines grasses primaires dont les chaînes alkyles comportent, en proportions molaires approximatives données dans le tableau ci-après, des chaines en $C_8$, $C_{10}$, $C_{12}$, $C_{14}$, $C_{16}$, $C_{18}$, $C_{20}$ et $C_{22}$.

| Coupe \ chaines alkyles | $C_8$ | $C_{10}$ | $C_{12}$ | $C_{14}$ | $C_{16}$ | $C_{18}$ | $C_{20}$ | $C_{22}$ |
|---|---|---|---|---|---|---|---|---|
| A | 0 | 0 | 0 | 1% | 28% | 71% | 0 | 0 |
| B | 0 | 0 | 0 | 1% | 5% | 42% | 12% | 40% |
| C* | 3% | 6% | 56% | 18% | 10% | 7% | 0 | 0 |

* La coupe C contient 5% de chaine alkyle en $C_{18}$insaturé et 2% de chaine alkyle en $C_{18}$ saturé.

La réaction d'addition du composé à fonction amine primaire sur le polyester insaturé est habituellement effectuée par simple chauffage à une température généralement d'environ 25 à 200 °C, de préférence de 50 à 180 °C et par exemple à environ 140°C. La réaction est effectuée par addition du composé à fonction amine primaire au polyester insaturé dissous dans un solvant choisi par exemple parmi ceux mentionnés ci-dessus, et chauffage, à la température choisie, pendant un temps suffisant pour que la réaction soit substantiellement complète. La durée de la réaction entre le composé à fonction amine primaire et le polyester insaturé est habituellement comprise entre environ 1 et 24 heures et le plus souvent entre environ 2 à 10 heures et par exemple environ 4 heures. La quantité de compsé à fonction amine primaire mise en réaction est habituellement de 0,2 à 1,5, de préférence de 0,8 à 1,2 mole et de manière plus préférée de 0,9 à 1,1 mole par mole de composé dicarboxylique mis en jeu dans la formation du polyester insaturé. La quantité de composé à fonction amine est par exemple d'environ 1 mole pour 1 mole de composé dicarboxylique.

Les polymères modifiés de la présente invention qui peuvent être avantageusement utilisés comme additifs dans les distillats moyens du pétrole sont ceux qui comportent des chaines latérales pendantes sensiblement linéaires ayant au moins 8 atomes de carbone, de préférence au moins 10 atomes de carbone et d'une manière plus préférée au moins 12 atomes de carbone, ladite chaine pouvant comporter des atomes d'oxygène et/ou d'azote. Ces chaines latérales peuvent provenir soit du composé monoépoxydé utilisé dans la préparation dfu polyester insaturé, soit du composé à fonction amine primaire mis en réaction avec le polyester insaturé, soit à la fois du composé monoépoxydé et du composé à fonction amine primaire.

De préférence, les polymères modifiés selon l'invention utilisés comme additifs dans les distillats moyens sont ceux qui comportent des chaines latérales pendantes ayant au moins 8 atomes de carbone, avantageusement au moins 10 atomes de carbone et d'une manière plus préférée au moins 12 atomes de carbone, provenant à la fois du composé monoépoxydé utilisé dans la préparation du polyester insaturé et du composé à fonction amine primaire mis en réaction avec le polyester insaturé.

Les polymères modifiés selon l'invention ont habituellement une masse moléculaire en nombre d'environ 400 à 20 000 et de préférence d'environ 500 à 5 000.

Les polymères modifiés préférés selon l'invention tels qu'ils sont définis ci-dessus sont particulièrement efficaces pour abaisser le point d'écoulement des distillats moyens de pétrole. Les additifs sont obtenus en solution dans le solvant choisi et peuvent être utilisés sous cette forme directement dans le distillats moyens de pétrole (par exemple dans les gazoles) dont on souhaite eméliorer le point d'écoulement.

Pour observer une nette amélioration du point d'écoulement des coupes de gazoles considérées dans l'invention, et définies ci-après, il est nécessaire d'ajouter ces additifs à des concentrations allant par exemple de 0,0001 à 2 % en poids et de préférence de 0,01 à 1 % en poids et plus avantageusement de 0.02 à 0,3 % en poids.

Les compositions de gazoles selon l'invention comprennent une proportion majeure de distillat moyen de pétrole ayant un intervalle de distillation selon la norme de distillation ASTM D 8667 se situant entre 150 et 450 °C (fuels-oils, gazoles) et une proportion mineure, suffisante pour en abaisser le point d'écoulement, d'au moins un polymère modifié défini ci-avant.

Les gazoles considérés plus particulièrement ont un intervalle de distillation allant d'une température initiale d'environ 160 à 190 °C à une température finale d'environ 360 à 430 °C.

Les compositions de gazole comprenant une proportion majeure de distillat moyen et au moins un additif choisi parmi les polymères modifiés selon l'invention, définis ci-avant, en quantité suffisante pour en abaisser le point d'écoulement, peuvent également comprendre d'autres additifs tels que par exemple des additifs antioxydants, des additifs dispersant les boues, des inhibiteurs de corrosion, etc...

Les compositions comprennent généralement au moins 95 % et de préférence au moins 98% en poids de distillat moyen.

L'abaissement du point d'écoulement peut aller, par exemple jusqu'à 21°C ou plus. En outre, il est possible d'observer simultanément un abaissement du point de trouble pouvant aller, par exemple, jusqu'à 4 °C ou plus.

Les polymères modifiés utilisés dans l'invention permettent, par leur action sur les phénomènes cinétiques de cristallisation, en particulier des paraffines, et sur la modification de la taille des cristaux qui se forment, l'emploi de la suspension à une température plus basse sans bouchage des canalisations, ni colmatage des filtres. Lorsque les cristaux de paraffines dont la formation est provoquée par le refroidissement sont apparus, leur tendance naturelle est de se rassembler par gravité dans la partie basse. Ce phénomène, généralement connu sous le terme de sédimentation, provoque le bouchage des canalisations et le colmatage des filtres et est préjudiciable à la bonne utilisation des distillats moyens et notamment des gazoles et fuels domestiques à basse température. Les polymères modifiés de l'invention diminuent la vitesse de sédimentation des paraffines formées par refroidissement des gazoles et autres distillats moyens ; les paraffines restant davantage en suspension se déposent moins sur les parois des conduites en contact avec les gazoles et autre distillats moyens, retardant ainsi le bouchage des dites conduites, et permettant d'utiliser un produit de caracéristiques donnés à une température nettement plus basse ou d'employer à une température donnée un produit, qui obtenu par le raffineur sans modification du schéma de distillation, n'a pas initialement les spécifications requises ; spécifications qui évoluent actuellement dans le sens d'une plus grande sévérité.

Les exemples suivants illustrent l'invention.

Dans les exemples, les coupes de gazoles utilisées sont celles qui figurent au tableau I ; elles sont caractérisées d'après la distillation ASTM D 8667, ces coupes de gazoles d'origine ARAMCO sont désignées par $G_1$ et $G_2$; leur masse volumique est également indiquée sur le tableau I.

Pour les coupes $G_1$ et $G_2$ sans additif et pour les compositions contenant un additif, deux déterminations ont été efectuées :

- le point de trouble suivant la norme ASTM D 2500-66
- le point d'écoulement suivant la norme ASTM D97-66

Tableau 1

| Gazoles | Distillation ASTM | | % distillé à 350 °C | Masse volumique à 15 °C en kg/l |
|---|---|---|---|---|
| | Pi °C | Pf °C | | |
| $G_1$ | 162 | 378 | 89 | 0,838 |
| $G_2$ | 184 | 385 | 85 | 0,853 |

Exemple 1 (comparatif)

On introduit dans un réacteur de 250 ml muni d'un réfrigérant et d'un système d'agitation, 9,8 g (0,1 mole) d'anhydride maléique et 28,4 g (0,11 équivalent molaire) d'époxy hexadécane à 6,2 % poids d'oxygène, puis 0,3 ml d'acide chlorhydrique concentré 12N. On porte à 140 °C et on maintient le mélange à cette température pendant 10 heures tout en agitant. On obtient un polyester insaturé sous forme d'un produit jaune, solide à la température ambiante, fondant vers 50 °C, que l'on dissout facilement dans approximativement le même poids de xylène soit environ 40 g : cette solution constitue la solution mère de l'additif A.

Le polyester peut être caractérisé par les moyens classiques d'analyses ; son spectre IR montre la disparition des bandes dues à l'anhydride maléique à 1850 $cm^{-1}$ et 1780 $cm^{-1}$ et l'apparition d'une forte bande ester à 1720 $cm^{-1}$.

Exemple 2

a) On prépare de la même manière que dans l'exemple 1 la même solution dans le xylène du même polyester que celui décrit dans l'exemple 1.

b) Dans le réacteur contenant le polyester insaturé dissous dans le xylène, on ajoute 28g (0,1 équivalent molaire d'amine primaire) d'une coupe d'amines grasses primaires dont les chaines alkyles comportent en moyenne en moles 1 % de $C_{14}$, 28% de $C_{16}$ et 71% de $C_{18}$.

Après 4 heures de chauffage à 140 °C tout en agitant, on obtient une solution d'un produit qui après évaporation du solvant serait à température ambiante un solide marron que l'on peut caractériser par les moyens classiques d'analyses :
sa masse moléculaire moyenne en nombre est de 1700 (mesurée par chromatographie d'Exclusion Stérique (Size Exclusion Chromatography), le spectre de R.M.N. montre la disparition de l'insaturation et confirme l'addition de l'amine sur la double liaison.

La solution obtenue est diluée de façon à obtenir une solution à 50 % en poids dans le xylène, du produit, qui constitue la solution mère de l'additif I.

Exemples 3 à 6

On prépare un polyester insaturé suivant l'exemple 2 a) et l'on procède sur diverses parts de ce polyester insaturé à l'addition de composés présentant des fonctions amines primaires, en suivant le mode opératoire décrit dans l'exemple 2 b) et en respectant les proportions molaires de l'exemple 2.

Les spectres IR et RMN des produits présentent les mêmes bandes caractéristiques que celles de l'additif I.

Exemple 3

La coupe d'amines grasses primaires additionnée au polyester est constituée d'amines primaires dont les chaines alkyles comprennent environ en moles : 1 % de $C_{14}$, 5 % de $C_{16}$, 42 % de $C_{18}$,, 12 % de $C_{20}$ et 40 % de $C_{22}$. On obtient ainsi une solution de l'additif II.

Exemple 4

La coupe d'amines grasses primaires additionnée au polyester est constituée d'amines primaires dont les chaines alkyles comprennent environ en moles 3 % de $C_8$, 6 % de $C_{10}$, 56 % de $C_{12}$, 18 % de $C_{14}$, 10% de $C_{16}$, 2 % de $C_{18}$ et 5 % de $C_{18}$ insaturé. On obtient ainsi une solution de l'additif III.

Exemple 5 :

Le composé à fonction amine primaire utilisé est l'hexadécyl oxy-3 propylamine. Le produit obtenu, en solution dans le xylène, constitue une solution de l'additif IV.

Exemple 6 :

Le composé à fonction amine primaire utilisé est l'amino-1 hexadécanol-16. Le produit obtenu, en solution dans le xylène constitue une solution de l'additif V.

Exemple 7 à 12 :

On prépare suivant les conditions expérimentales décrites dans l'exemple 2 a) des polyesters insaturés qui différent de celui qui a été décrit dans l'exemple 2 a) par la nautre de l'époxyalcane. On additionne ensuite sur ces polyesters insaturés la même coupe d'amines grasses que celle qui a été décrite dans l'exemple 2 b) en suivant le même mode opératoire que celui décrit dans cet exemple 2 et en respectant les proportions molaires de cet exemple 2.

Exemple 7 :

L'époxyalcane utilisé pour préparer le polyester insaturé de cet exemple est un époxyeicosane à 5,2 % d'oxygène.

L'addition de la coupe d'amines décrite dans l'exemple 1 b) fournit une solution de l'additif VI. L'additif VI a une masse moléculaire moyenne en nombre de 2400 (mesurée par Chromatographie d'Exclusion Stérique).

Exemple 8 :

On utilise un époxyoctadécane à 5,8 % d'oxgène pour préparer un polyester insaturé sur lequel est additionnée la coupe d'amines décrite dans l'exemple 1 b), ce qui fournit une solution de l'additif VII.

Exemple 9 :

Un époxytétradécane à 7,7 % d'oxygène est utilisé pour préparer un polyester insaturé sur lequel est additionnée la coupe d'amines décrite dans l'exemple 1 b), ce qui fournit une solution de l'additif VIII.

Exemple 10 :

L'époxyde obtenue à partir d'une coupe d'alpha oléfines linéaires en $C_{15}$-$C_{20}$ (comportant en poids en moyenne 17 % de $C_{15}$, 18 % de $C_{16}$, 17 % de $C_{17}$, 17 % de $C_{18}$, 15% de $C_{19}$ et 12 % de $C_{20}$) époxydée à 5 % poids d'oxygène sert à préparer un polyester insaturé qui après addition de la coupe d'amines décrite dans l'exemple 1 b) fournit une solution de l'additif IX.

Exemple 11 :

L'époxyde obtenu à partir d'une coupe d'alpha-olefines linéaires $C_{18}$-$C_{24}$ (environ en poids 1 % de $C_{18}$, 49 % de $C_{20}$, 42% de $C_{22}$ et 8 % de $C_{24}$), époxydée à 4,5 % poids d'oxygène est utilisée pour obtenir un polyester insaturé sur lequel est additionnée la coupe d'amines grasses primaires décrite dans l'exemple 1 b). On obtient ainsi une solution de l'additif X.

Exemple 12 (comparatif) :

On prépare un polyester insaturé suivant l'exemple 2 a) et l'on procède à l'addition de n-butylamine sur ce polyester en suivant le mode opératoire décrit dans l'exemple 2 b) et en respectant les proportions molaires de l'exemple 2 b).

Les spectres IR et RMN du produit montrent la disparition de l'insaturation et confirme l'addition de la n-butylamine sur le polyester insaturé.

La solution dans le xylène du produit obtenue constitue une solution de l'additif XI.

Exemple 13 :

On prépare en polyester insaturé l'exemple 2 et l'on procède à l'addition de la coupe d'amines définie dans l'exemple 2 b sur ce polyester en suivant le mode opératoire suivi dans cet exemple à l'exception du fait que l'on utilise 0,05 équivalent molaire d'amine. La solution dans le xylène du produit obtenu constitue une solution de l'additif XII.

Les additifs décrits ci-dessus sont obtenus en solution dans le xylène. La concentration des solutions est ajustée à 50 % poids de matière sèche, ce qui fournit les solutions mères de ces additifs dont on teste l'activité en les incorporant à raison de 0,1 % en poids par rapport au gazole dont les caractéristiques ont été données dans le tableau I ci-avant.

Les résultats de ces déterminations sont rassemblés dans le tableau II ci-après. Ils montrent nettement l'amélioration du point d' écoulement que permettent d'obtenir les copolymères modifiés selon l'invention par rapport à un gazole sans additif, par rapport à l'emploi d'un polyester insaturé (A) non modifié (exemple comparatif) et par rapport à l'emploi d'un polyester insaturé modifié par une amine primaire à chaîne courte (n-butylamine - exemple 12 comparatif).

Tableau 2

| Additifs % poids | Point de trouble (°C) | | Point d'écoulement (°C) | |
|---|---|---|---|---|
| | G1 | G2 | G1 | G2 |
| néant | + 1 | + 3 | - 6 | - 6 |
| 0,1 % A | 0 | + 2 | - 15 | - 12 |
| 0,1 % I | - 2 | 0 | - 27 | - 24 |
| 0,1 % II | - 1 | + 1 | - 24 | - 21 |
| 0,1 % III | - 1 | 0 | - 30 | - 27 |
| 0,1 % IV | - 2 | + 1 | - 21 | - 21 |
| 0,1 % V | - 1 | 0 | - 21 | - 18 |
| 0,1 % VI | - 2 | 0 | - 18 | - 15 |
| 0,1 % VII | - 3 | 0 | - 24 | - 21 |
| 0,1 % VIII | - 1 | + 1 | - 27 | - 27 |
| 0,1 % IX | - 2 | + 1 | - 27 | - 24 |
| 0,1 % X | - 2 | 0 | - 18 | - 18 |
| 0,1 % XI | 0 | + 2 | - 15 | - 12 |
| 0,1 % XII | - 1 | 1 | - 24 | - 24 |

**Revendications**

1- Polymère de masse moléculaire moyenne en nombre de 400 à 20 000 comportant des groupes amino-substitués dans sa molécule, caractérisé en ce qu'il résulte de la réaction d'au moins un composé à fonction amine primaire comprenant au moins 8 atomes de carbone dans sa molécule et répondant à l'une des formules générales :

$$R - Z \left[ (CH_2)_n - NH \right]_m H \qquad (I)$$

$$\text{et } HO - R'' - NH_2 \qquad (II)$$

où R représente un radical aliphatique monovalent ayant au plus 46 atomes de carbone, Z est choisi parmi les groupes -O-, -NH- et -NR'- dans lesquels R' représente un radical aliphatique monovalent de 1 à 30 atomes de carbone, n est un nombre entier de 2 à 4, m est zéro lorsque Z est -NH- ou un nombre entier de 1 à 4 dans tous les cas, R" représente un radical aliphatique divalent de 8 à 46 atomes de carbone, sur un polyester insaturé résultant de la condensation d'au moins un composé dicarboxylique insaturé ayant de 4 à 8 atomes de carbone dans sa molécule sur au moins un composé monoépoxydé ayant au moins 8 atomes de carbone dans sa molécule, le rapport molaire composé monoépoxydé/composé dicarboxylique étant d'environ 0,8:1 à environ 1,2:1 et le rapport molaire composé à fonction amine primaire/composé dicarboxylique étant d'environ 0,2:1 à environ 1,5:1.

2- Polymère selon la revendication 1, dans lequel le composé dicarboxylique est choisi parmi l'anhydride maléique, l'anhydride itaconique et l'anhydride citraconique.

3- Polymère selon la revendication 1 ou 2, dans lequel le composé monoépoxydé est un monoépoxy alkane terminal de formule

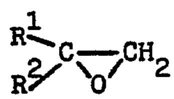

dans laquelle $R^1$ est l'hydrogène ou un groupe alkyle inférieur de 1 à 4 atomes de carbone, $R^1$ étant de préférence l'hydrogène, et $R^2$ est un groupe alkyle linéaire ayant de 6 à 48 atomes de carbone.

4- Polymère selon l'une des revendications 1 à 3, dans lequel le composé à fonction amline primaire est une monoalkylamine primaire substantiellement linéaire ayant de 10 à 46 atomes de carbone.

5- Polymère selon l'une des revendications 1 à 3, dans lequel le composé à fonction amine primaire est un éther-amine primaire linéaire de formule

$$R - O \left[ (CH_2)_n - NH \right]_m H,$$

où R représente un radical alklyle substantiellement linéaire de 6 à 24 atomes de carbone, m est un nombre entier de 1 à 4 et n est un nombre entier de 2 à 4.

6- Polymère selon l'une des revendications 1 à 3, dans lequel le composé à fonction amine primaire est un aminoalcool de formule HO - R" - $NH_2$ où R" représente un radical alkylène substantiellement linéaire de 8 à 24 atomes de carbone.

7- Polymère selon l'une des revendications 1 à 3, dans lequel le composé à fonction amine primaire est une polyamine aliphatique saturée de formule

$$R{-}NH \left[ (CH_2)_n - NH \right]_m H,$$

où R représente un radical alkyle substantiellement linéaire de 6 à 24 atomes de carbone, m est un nombre entier de 1 à 4 et n est un nombre entier de 2 à 4.

8- Polymère selon l'une des revendications 1 à 3, dans lequel le composé à fonction amine primaire est une polyamine de formule

où R et R′ représentent chacun un radical alkyle substantiellement linéaire de 8 à 24 atomes de carbone, R et R′ renfermant ensemble au moins 16 atomes de carbone, m est un nombre entier de 1 à 4 et n est un nombre entier de 2 à 4.

9- Composition de distillat moyen caractérisée en ce qu'elle comprend une proportion majeure de distillat moyen de pétrole ayant un intervalle de distillation entre 150 et 450 °C et une proportion mineure, suffisante pour en abaisser le point d'écoulement, d'au moins un polymère selon l'une des revendications 1 à 8.

10- Composition de distillat moyen selon la revendication 9 caractérisée en ce que le distillat moyen consiste en une coupe de gazole ayant un intervalle de distillation allant d'une température initiale d'environ 160 °C à une température finale d'environ 360 °C à 430 °C.

11- Composition de distillat moyen selon la revendication 9 ou 10 caractérisée en ce que la proportion du polymère est de 0,001 à 2% en poids.

## Patentansprüche

1. Polymer mit einem zahlendurchschnittlichen Molekulargewicht von 400 bis 20 000, das in seinem Molekül Aminosubstituentengruppen aufweist, dadurch gekennzeichnet, daß es erhalten wird durch Umsetzung mindestens einer Verbindung mit primärer Aminfunktion, die mindestens 8 Kohlenstoffatome in ihrem Molekül enthält und einer der allgemeinen Formeln entspricht:

$$R - Z \left[ (CH_2)_n - NH \right]_m H \qquad (I) \text{ und}$$

$$HO - R'' - NH_2 \qquad (II)$$

worin R einen monovalenten aliphatischen Rest mit höchstens 46 Kohlenstoffatomen darstellt, Z ausgewählt wird aus den Gruppen –O–, –NH– und –NR′–, worin R′ für einen monovalenten aliphatischen Rest mit 1 bis 30 Kohlenstoffatomen steht, n eine ganze Zahl von 2 bis 4, m die Zahl 0, wenn Z für –NH– steht, oder eine ganze Zahl von 1 bis 4 in allen anderen Fällen und R″ einen divalenten aliphatischen Rest mit 8 bis 46 Kohlenstoffatomen darstellen,

mit einem ungesättigten Polyester, der erhalten wird bei der Kondensation mindestens einer ungesättigten Dicarbonsäureverbindung mit 4 bis 8 Kohlenstoffatomen in ihrem Molekül mit mindestens einer Monoepoxidverbindung mit mindestens 8 Kohlenstoffatomen in ihrem Molekül, wobei das Molverhältnis zwischen der Monoepoxidverbindung und der Dicarbonsäureverbindung etwa 0,8/1 bis etwa 1,2/1 beträgt und das Molverhältnis zwischen der Verbindung mit primärer Aminfunktion und der Dicarbonsäureverbindung etwa 0,2/1 bis etwa 1,5/1 beträgt.

2. Polymer nach Anspruch 1, in dem die Dicarbonsäureverbindung ausgewählt wird aus Maleinsäureanhydrid, Itaconsäureanhydrid und Citraconsäureanhydrid.

3. Polymer nach Anspruch 1 oder 2, in dem die Monoepoxidverbindung ein terminales Monoepoxyalkan der Formel ist

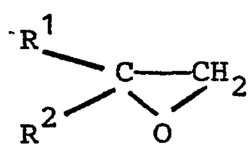

in der $R^1$ Wasserstoff oder eine niedere Alkylgruppe mit 1 bis 4 Kohlenstoffatomen, vorzugsweise Wasserstoff, und $R^2$ eine lineare Alkylgruppe mit 6 bis 48 Kohlenstoffatomen bedeuten.

4. Polymer nach einem der Ansprüche 1 bis 3, in dem die Verbindung mit primärer Aminfunktion ein im wesentlichen lineares primäres Monoalkylamin mit 10 bis 46 Kohlenstoffatomen ist.

5. Polymer nach einem der Ansprüche 1 bis 3, in dem die Verbindung mit primärer Aminfunktion ein linearer primärer Aminester der Formel

$$R-O-\left[ (CH_2)_n-NH \right]_m-H$$

ist, worin R einen im wesentlichen linearen Alkylrest mit 6 bis 24 Kohlenstoffatomen, m eine ganze Zahl von 1 bis 4 und n eine ganze Zahl von 2 bis 4 bedeuten.

6. Polymer nach einem der Ansprüche 1 bis 3, in dem die Verbindung mit primärer Aminfunktion ein Aminoalkohol der Formel

$HO{-}R''{-}NH_2$

ist, worin R" einen im wesentlichen linearen Alkylenrest mit 8 bis 24 Kohlenstoffatomen darstellt.

7. Polymer nach einem der Ansprüche 1 bis 3, in dem die Verbindung mit primärer Aminfunktion ein gesättigtes aliphatisches Polyamin der Formel

$$R{-}NH{-}\left[(CH_2)_n{-}NH\right]_m{-}H$$

ist, worin R einen im wesentlichen linearen Alkylrest mit 6 bis 24 Kohlenstoffatomen, m eine ganze Zahl von 1 bis 4 und n eine ganze Zahl von 2 bis 4 darstellen.

8. Polymer nach einem der Ansprüche 1 bis 3, in dem die Verbindung mit primärer Aminfunktion ein Polyamin der Formel

$$\begin{matrix}R\\R'\end{matrix}\!>N{-}\left[(CH_2)_n{-}NH\right]_m{-}H$$

ist, worin R und R' jeweils einen im wesentlichen linearen Alkylrest mit 8 bis 24 Kohlenstoffatomen darstellen, wobei R und R' gemeinsam mindestens 16 Kohlenstoffatome enthalten, m eine ganze Zahl von 1 bis 4 und n eine ganze Zahl von 2 bis 4 bedeuten.

9. Destillat-Zusammensetzung, dadurch gekennzeichnet, daß sie umfaßt einen größeren Mengenanteil Erdöl-Destillat mit einem Destillationsbereich zwischen 150 und 450°C und einen kleineren, zur Absenkung des Fließpunktes ausreichenden Mengenanteil mindestens eines Polymers nach einem der Ansprüche 1 bis 8.

10. Destillat-Zusammensetzung nach Anspruch 9, dadurch gekennzeichnet, daß das Destillat besteht aus einer Gasöl-Fraktion mit einem Destillationsbereich, der von einer Anfangstemperatur von etwa 160 bis 190°C bis zu einer Endtemperatur von etwa 360 bis 430°C reicht.

11. Destillat-Zusammensetzung nach Anspruch 9 oder 10, dadurch gekennzeichnet, daß der Mengenanteil des Polymers 0,001 bis 2 Gew.-% beträgt.

**Claims**

1. A polymer of average number molucular weight from 400 to 20 000 comprising amino-substituted groups in its molecule, characterized in that it obtained by reacting at least one compound with primary amine group comprising at least 8 carbon atoms in its molecule and complying with one of the general formulas:

$$R - Z - \left[(CH_2)_n - NH\right]_m - H \qquad (I) \text{ and}$$

$$HO - R'' - NH_2 \qquad (II)$$

wherein R is a monovalent aliphatic radical having at most 46 carbon atoms, Z is selected from –O–, –NH– and –NR'– groups in which R' is a monovalent aliphatic radical having 1–30 carbon atoms, n is an integer from 2 to 4, m is an integer from 1 to 4 or zero Z is –NH–, R" is a divalent aliphatic radical having 8–46 carbon atoms, with an unsaturated polyester resulting from the condensation of at least one unsaturated dicarboxylic compound having 4–8 carbon atoms in its molecule on at least one monoepoxidated compound having at least 8 carbon atoms in its molecule, the molar ratio: monoepoxidated compound/dicarboxylic compound being from about 0.8:1 to about 1.2:1 and the molar ratio: compound with primary amine group/dicarboxylic compound ranging from about 0.2:1 to about 1.5:1.

2. A polymer according to claim 1, wherein the dicarboxylic compound is selected from maleic anhydride, itaconic anhydride and citraconic anhydride.

3. A polymer according to claim 1 or 2, wherein the mono-epoxidated compound is an ending monoepoxyalkane of formula:

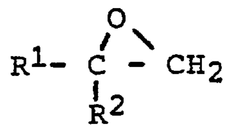

wherein $R^1$ is hydrogen or a lower alkyl group having 1–4 carbon atoms, $R^1$ being preferably hydrogen, and $R^2$ being a linear alkyl group having 6–48 carbon atoms.

4. A polymer according to one of claims 1 to 3, wherein the compound with primary amine group is a substantially linear primary monoalkylamine having 10–46 carbon atoms.

5. A polymer according to one of claims 1 to 3, wherein the compound with primary amine group is a linear primary ether-amine of formula

$$R - O - [(CH_2)_n - NH]_m - H$$

wherein R is a substantially liner alkyl radical of 6–24 carbon atoms, m is an integer from 1 to 4 and n is an integer from 2 to 4.

6. A polymer according to one of claims 1 to 3, wherein the compound with primary amine group is an aminoalcohol of formula $HO{-}R''{-}NH_2$ in which R″ is a substantially linear alkylen radical of 8–24 carbon atoms.

7. A polymer according to one of claims 1 to 3, wherein the compound with primary amine group is a saturated aliphatic polyamine of formula

$$R{-}NH - [(CH_2)_n - NH]_m - H$$

in which R is a substantially linear alkyl radical of 6–24 carbon atoms, m is an integer from 1 to 4 and n is an integer from 2 to 4.

8. A polymer according to one of claims 1 to 3, wherein the compound with primary amine group is a polyamine of formula:

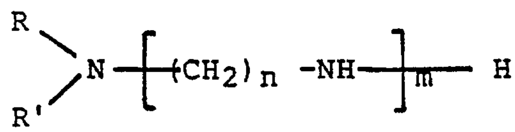

in which R and R′ are each a substantially linear alkyl radical having 8–24 carbon atoms, R and R′ together containing at least 16 carbon atoms, m is an integer from 1 to 4 and n is an integer from 2 to 4.

9. An middle distillate composition characterized in that it comprises a major portion of a petroleum middle distillate having a distillation range from 150 to 450°C and a minor portion, sufficient for lowering the pour point, of at least one polymer according to one of claims 1 to 8.

10. A middle distillate composition according to claim 9, characterized in that the middle distillate consists of a gas-oil out having a distillation range between an initial temperature of about 160–190°C and a final temperature of about 360–430°C.

11. A middle distillate composition according to claim 9 or 10, characterized by a polymer proportion from 0.001 to 2% by weight.